# EUROPÄISCHE PATENTANMELDUNG

(11) **EP 0 758 594 A1**
(43) Veröffentlichungstag der Anmeldung: **19.02.1997**
(21) Anmeldenummer: 96112678.6
(22) Anmeldetag: 06.08.1996
(51) Int. Cl.: B60R 13/01, B32B 21/06

(54) **Plattenförmiger Körper**

(30) Priorität: 10.08.1995 DE 19529506
(71) Anmelder: Blomberger Holzindustrie B. Hausmann GmbH & Co. KG, 32817 Blomberg (DE)
(72) Erfinder: Schmitz, Thomas, 32816 Schieder-Schwalenberg (DE)
(74) Vertreter: Grünecker, Kinkeldey, Stockmair & Schwanhäusser Anwaltssozietät

(57) **Zusammenfassung**

Die Erfindung bezieht sich auf ein Verfahren zum Herstellen eines Fahrzeugbodens mit einem Holzwerkstoffe aufweisenden Kern (2), der auf seiner Rückseite (5) mit einem Phenolharz und Papier aufweisenden Deckfilm (9) beschichtet ist, auf dem Riffelboden (15) eines Kastenwagens oder dergleichen befestigt ist. Um die Montagezeit für derartige plattenförmige Körper zu verkürzen ist vorgesehen, daß der plattenförmige Körper auf den Riffelboden des Fahrzeuges geklebt wird, wobei der auf der Rückseite des plattenförmigen Körpers vorgesehene Deckfilm einen Papieranteil von mehr als 40% aufweist.

## Beschreibung

Die Erfindung bezieht sich auf ein Verfahren zum Herstellen eines Fahrzeugbodens und Verwendung eines plattenförmigen Körpers gemaß den Merkmalen des Oberbegriffs des Patentanspruches 1.

Insbesondere bei Kastenfahrzeugen, wie sie im Bereich des Handwerks viel benutzt werden, sind die aus Blech bestehenden Riffelböden überaus großen Belastungen ausgesetzt, wodurch nach relativ kurzer Zeit die Lackierung leidet, und sich Roststellen am Fahrzeugboden bilden.

Es gibt daher Fahrzeugböden aus Sperrholz, deren Ober- bzw. Vorderseite aus einer eine Siebstruktur aufweisende Phenolharzbeschichtung besteht. Die dem Riffelboden zugewandte Rückseite weist eine glatte Phenolharzbeschichtung auf. Diese Sperrholzplatten werden in aller Regel mittels Nieten oder Schrauben an dem Riffelboden des Fahrzeuges befestigt. Das hat den Nachteil, daS der Riffelboden, bzw. der Rahmen des Fahrzeuges, durchbohrt wird, was wiederum zu Roststellen an den Böden führen kann.

Um die Montagezeit für derartige plattenförmige Körper zu verkürzen gab es Versuche, die plattenförmigen Körper durch Kleben an den Riffelböden bzw. Stahlrahmen zu befestigen. Um jedoch eine stabile Verbindung zwischen den Riffelböden bzw. Stahlrahmen und den plattenförmigen Körpern zu gewährleisten, ist es bislang erforderlich die Oberfläche der Beschichtung zunächst anzuschleifen und anschließend mit einem Grundiermittel z.B. "Primer" ausreichend zu benetzen, bevor der plattenförmige Körper auf den mit einer oder mehreren Raupen aus Klebstoff vorbereiteten Riffelboden bzw. Stahlrahmen aufgelegt und verklebt werden kann. Auf diese Weise läßt sich die Montage vereinfachen. Durch den Wegfall von Arbeitsgängen wie z.B. Bohren, die einerseits handwerkliches Können voraussetzen und andererseits die Benutzung vergleichsweise teurer Bohrmaschinen erfordern, eignet sich ein Verkleben der plattenförmigen Körper mit den Riffelböden bzw. Stahlrahmen auch zur Selbstmontage durch den Kunden. Jedoch ist das Anschleifen zeitaufwendig und produziert gesundheitsschädlichen Schleifstaub. Zudem muß die Plattte nach dem Aufbringen des Primers noch geraume Zeit ablüften.

Aufgabe der Erfindung ist es daher, ein Verfahren der eingangs genannten Art so zu verbessern, daß sich einerseits die Montagezeit erheblich verkürzen läßt und andererseits zusätzlich potentielle Roststellen vermieden werden.

Diese Aufgabe wird erfindungsgemäß durch die Merkmale des Patentanspruches 1 gelöst.

Diese Lösung ist einfach und bewirkt, daß sich die plattenförmigen Körper z.B. auf lackierten Flächen wie Riffelböden oder Stahlrahmen von Transportern verkleben lassen, ohne daß es erforderlich ist die Beschichtung zunächst anzuschleifen und anschließend mit einem Grundiermittel ausreichend zu benetzen. Die Montagezeit läßt sich dadurch drastisch verkürzen.

In einer vorteilhaften Ausgestaltung der Erfindung beträgt das Gesamtgewicht des Deckfilms ca. 214g/m² bei einem Papiergewicht von mindestens 150g/m². Bei diesem Papieranteil am Gesamtgewicht des Deckfilms kann sich eine besonders feste Verklebung zwischen dem Deckfilm und z.B. dem Riffelboden oder Rahmen des Transporters ergeben.

Darüberhinaus kann es sich als günstig erweisen, wenn zwischen Kern und Deckfilm ein Leimfilm aus Phenolharz und Papier vorgesehen ist, der ein Gesamtgewicht von ca. 60g/m² bei einem Papiergewicht von ca. 23g/m² aufweist. Bei dieser Zusammensetzung des Leimfilms läßt sich eine besonders feste Verbindung zwischen dem Deckfilm und dem Kern erzielen. Daher ist es günstig, wenn der Papieranteil des Deckfilmes größer als der Papieranteil des Leimfilmes ist.

In einer vorteilhaften Weiterbildung der Erfindung kann der plattenförmige Körper auf der Vorderseite eine Beschichtung aufweisen, die über einen Phenolharz und Papier aufweisenden Deckfilm verfügt, wobei der Deckfilm mit dem Kern verpreßt ist. Dadurch läßt sich ein wirkungsvoller Schutz des Kerns verwirklichen und die Lebensdauer des plattenförmigen Körpers verlängern.

Von Vorteil kann es dabei sein, wenn der Deckfilm der Vorderseite ein Gesamtgewicht von ca. 117g/m² bei einem Papiergewicht von ca. 42g/m² aufweist. Bei dieser Zusammensetzung der Deckfilmes läßt sich eine besonders verschleißfeste Oberfläche erzielen.

Von Vorteil kann es zudem sein, wenn die Oberfläche zumindest einer der Deckfilme eine Siebstruktur aufweist. Bei einer derartigen Oberflächenstruktur läßt sich die Rutschsicherheit des plattenförmigen Körpers zusätzlich erhöhen.

Von Vorteil kann es dabei sein, wenn die Oberfläche des Deckfilmes der Vorderseite eine Siebstruktur aufweist.

Um eine bessere Verklebung zwischen dem Deckfilm der Rückseite und z.B. dem Riffelboden oder Rahmen zu erzielen, kann es sich als günstig erweisen, wenn die Oberfläche des Deckfilmes der Rückseite im wesentlichen eben ist.

Um einen besonders stabilen plattenförmigen Körper zu erhalten, kann es sich als günstig erweisen, wenn der Kern aus beleimten, kreuzweise mehrfach übereinander gelegten und miteinander verpreßten Furnieren besteht. Die dadurch entstandene Sperrholzstruktur verfügt über eine hohe Festigkeit und verhindert unerwünschte Verformungen des plattenförmigen Körpers weitgehenst.

Zudem kann es vorteilhaft sein, wenn der Kern eine Stäbchenplatte aufweist. Dadurch läßt sich die Stabilität des plattenförmigen Körpers in bestimmten Richtungen erhöhen.

Vorteilhaft kann es zudem sein, wenn der Kern Massivholz aufweist.

Um die Herstellungkosten des plattenförmigen Körpers zu senken, kann es sich als vorteilhaft erweisen, wenn die Beschichtungen auf Vorder- und Rückseite des plattenförmigen Körpers gemeinsam mit dem Kern verpreßt sind. Dadurch wird die Anzahl der Arbeitsgänge minimiert.

Ferner kann es sich als vorteihaft erweisen, wenn zumindest eine der Beschichtungen unter Wärmezufuhr mit dem Kern verpreßt ist. Eine derartig hergestellter plattenförmiger Körper kann kostengünstiger hergestellt sein.

Im folgenden wird die Erfindung anhand eines Ausführungsbeispieles näher erläutert:

Es zeigen:
- Fig. 1: eine teilweise Schnittansicht des erfindungsgemäßen plattenförmigen Körpers entlang der Linie I-I aus Figur 2;
- Fig. 2: eine schematische Darstellung von Anwendungsbeispielen für den erfindungsgemäßen plattenförmigen Körper.

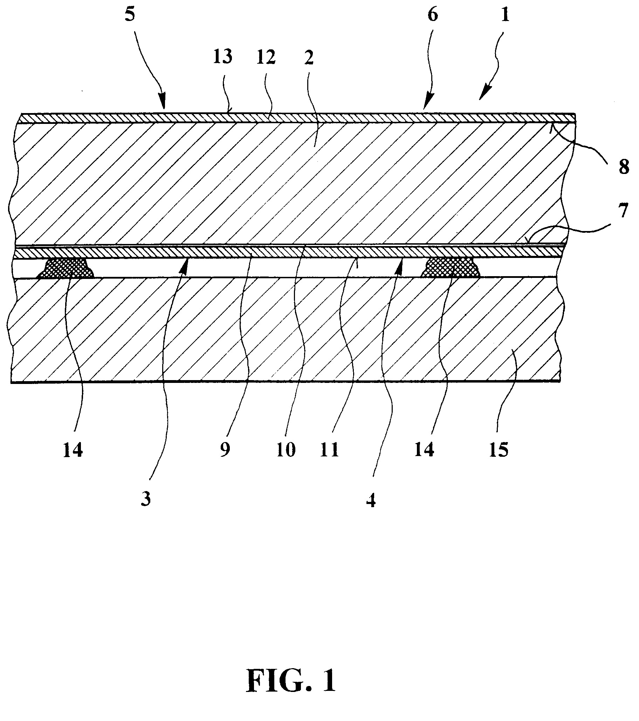

Figur 1 zeigt erfindungsgemäß den plattenförmigen Körper 1 im montierten Zustand in einer Schnittansicht. Der plattenförmige Körper 1 besteht aus einem Kern 2 und einer Beschichtung 3 auf der Rückseite 4 und einer Beschichtung 5 auf der Vorderseite 6 des plattenförmigen Körpers 1.

Der Kern 2 ist aus Buchensperrholz gefertigt und verfügt über eine im wesentlichen plattenförmige Gestalt mit einer Unterseite 7 und einer Oberseite 8. Beide Beschichtungen 3 und 5 sind jeweils mit dem Kern 2 unter Hitzeeinwirkung verpreßt, wobei die Beschichtigung 3 auf der Rückseite mit der Unterseite 7 und die Beschichtung 4 auf der Vorderseite 6 mit der Oberseite 8 verpreßt ist.

Die erste Beschichtung 3 auf der Rückseite weist einen Deckfilm 9 auf, der aus Phenolharz und Papier gebildet ist und über ein Gesamtgewicht von 214g/m² bei einem Papiergewicht von 150g/m² verfügt. Zwischen dem Deckfilm 9 auf der Rückseite und dem Kern 2 befindet sich eine Leimschicht 10, die ebenfalls aus Phenolharz und Papier besteht und über ein Gesamtgewicht von 60g/m² bei einem Papiergewicht von 23g/m² verfügt. Der Deckfilm 9 auf der Rückseite und die Leimschicht 10 bilden zusammen die Beschichtung 3 auf der Rückseite des plattenförmigen Körpers. Eine dem Kern 2 abgewandte Oberfläche 11 des Deckfilmes 9 auf der Rückseite verfügt über eine im wesentlichen ebene Oberflächenstruktur.

Die Beschichtung 5 auf der Vorderseite besteht aus einem Deckfilm 12, der ebenfalls aus Phenolharz und Papier besteht und ein Gesamtgewicht von ca. 117g/m² bei einem Papiergewicht von 42g/m² aufweist. Eine dem Kern 2 abgewandte Oberfläche 13 des Deckfilmes 12 der Vorderseite verfügt über eine Siebstruktur. Im Gegensatz zum Deckfilm 9 der Rückseite ist der die Beschichtung 5 der Vorderseite bildende Deckfilm 12 direkt mit dem Kern 2 verpreßt.

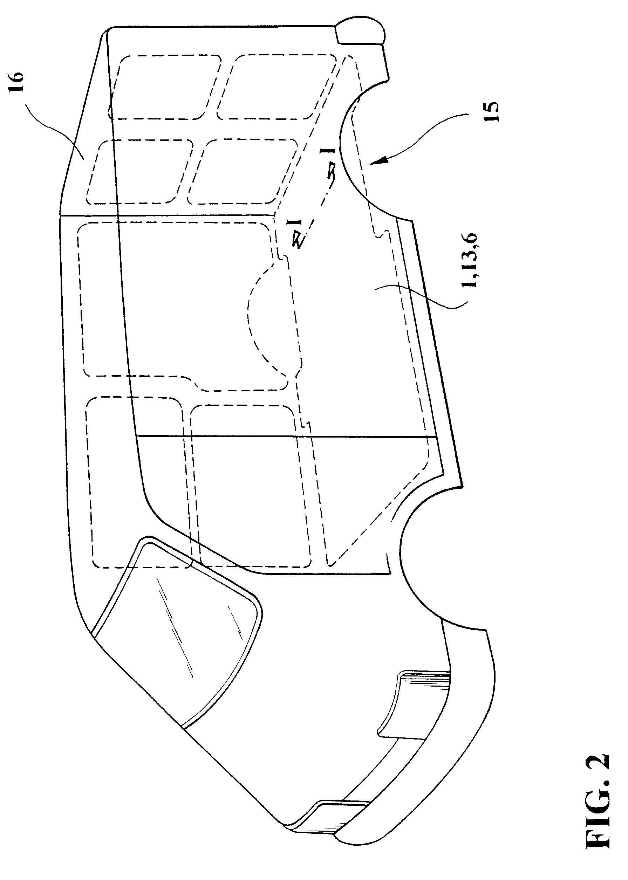

Im montierten Zustand des plattenförmigen Körpers 1 ist dieser über Klebstoffraupen 14 mit z.B. einem Riffelboden, einer Karosserie 16 eines Transporters verbunden. Die Karosserie 16 ist in Figur 2 schematisch dargestellt. Als Kleber wird ein Polyurethankleber verwendet, der beispielsweise unter der Handelsbezeichnung Sikaflex ® -252 von der Fa. Sika erhältlich ist.

Die Klebstoffraupen 14 grenzen im montierten Zustand des plattenförmigen Körpers 1 an die Oberfläche 11 des Deckfilmes 9 der Rückseite an.

Im folgenden wird die Wirkungs- und Funktionsweise der Erfindung näher erläutert.

Zur Montage des plattenförmigen Körpers 1 werden zunächst die Klebstoffraupen 14 auf z.B. den lackierten Riffelboden 13 der Karosserie 16 aufgebracht. Anschließend wird der plattenförmige Körper 1 mit seiner Oberfläche 11 auf die Klebstoffraupen 14 aufgelegt, wodurch eine Klebstoffverbindung zwischen dem plattenförmigen Körper 1 und dem Riffelboden 15 hergestellt wird. Nach dem Aushärten des Klebstoffes dient die Oberfläche 13 der Vorderseite sodann als Unterlage für Gegenstände, die mit dem Transporter transportiert werden sollen. Auf diese Weise wird ein verkratzen oder eine Beschädigung des Riffelbodens 15 der Karosserie 16 des Transporters vermieden.

Im Gegensatz zu herkömmlichen Lösungen, wird die Montage des plattenförmigen Körpers 1 stark vereinfacht, so daß sie sich auch problemlos im Rahmen einer Selbstmontage durch den Kunden durchführen läßt. Dadurch, daß keine mechanische Bearbeitung am Riffelboden 15 der Karosserie 16 erforderlich ist, werden Roststellen verhindert. Darüberhinaus ist es gegenüber herkömmlichen Lösungen nicht mehr erforderlich, die Oberfläche 11 der Rückseite anzuschleifen. Die hervorragenden Montageeigenschaften des plattenförmigen Körpers 1 ergeben sich insbesondere im Zusammenhang mit der Leimschicht 10 und dem Deckfilm 9 auf der Rückseite, welche die Beschichtung 3 der Rückseite des plattenförmigen Körpers bilden und aufgrund ihrer Zusammensetzung eine stabile Verklebung des plattenförmigen Körpers 1 mit z.B. dem Riffelboden 15 ermöglichen, ohne daß die Oberfläche 11 der Rückseite mechanisch oder chemisch bearbeitet werden muß.

## Patentansprüche

1. Verfahren zum Herstellen eines Fahrzeugbodens, bei dem ein plattenförmiger Körper mit einem Holzwerkstoffe aufweisenden Kern, der auf seiner Rückseite mit einem Phenolharz und Papier aufweisenden Deckfilm beschichtet ist, auf dem Riffelboden eines Kastenwagens oder dergleichen befestigt wird,
**dadurch gekennzeichnet,**
daß der plattenförmige Körpers auf den Riffelboden des Fahrzeuges geklebt wird, wobei der auf der Rückseite des plattenförmigen Körpers vorgesehene Deckfilm einen Papieranteil von mehr als 40% aufweist.

2. Verfahren nach Anspruch 1,
**dadurch gekennzeichnet,**
daß man einen Deckfilms verwendet, dessen Gesamtgewicht bei 214g/m² bei einem Papiergewicht von mindestens 150g/m² beträgt.

3. Verfahren nach Anspruch 1 oder 2,
**dadurch gekennzeichnet,**
daß man zwischen dem Deckfilm und dem Kern des plattenförmigen Körpers einen Leimfilm aus Phenolharz und Papier vorsieht.

4. Verfahren nach der Ansprüche 1 bis 3,
**dadurch gekennzeichnet,**
daß der Leimfilm ein Gesamtgewicht von 60g/m² bei einem Papiergewicht von ca. 23g/m² aufweist.

5. Verfahren nach einem der Ansprüche 1 bis 4,
**dadurch gekennzeichnet,**
daß man zum Ankleben des plattenförmigen Körpers auf den Riffelboden des Fahrzeuges einen Polyurethan-Kleber verwendet.

6. Plattenförmiger Körper zur Durchführung des Verfahrens nach einem der Ansprüche 1 bis 5,
**dadurch gekennzeichnet,**
daß der plattenförmige Körper einen aus Holzwerkstoffen bestehenden Kern (2) aufweist, der auf zumindest seiner Rückseite (5) mit einem aus Phenolharz und Papier bestehenden Deckfilm (9) beschichtet ist, der mit dem Kern (2) verpreßt ist, wobei der Deckfilm (9) einen Papieranteil von mehr als 40% aufweist.

7. Plattenförmiger Körper nach Anspruch 6,
**dadurch gekennzeichnet,**
daß zwischen dem Deckfilm (9) und dem Kern (2) ein Leimfilm (10)vorgesehen ist, dessen Papieranteil geringer ist, als der des Deckfilmes.

8. Plattenförmiger Körper nach Anspruch 6 oder 7,
**dadurch gekennzeichnet,**
daß der Deckfilm (9) ein Gesamtgewicht von ca. 214g/m² bei einem Papiergewicht von mindestens 150g/m² aufweist.

9. Plattenförmiger Körper nach einem der Ansprüche 6 bis 8,
**dadurch gekennzeichnet,**
daß der Leimfilm (10) ein Gesamtgewicht von 60g/m² bei einem Papiergewicht von ca. 23g/m² aufweist.

10. Plattenförmiger Körper nach einem der Ansprüche 6 bis 9,
**dadurch gekennzeichnet,**
daß der plattenförmige Körper auf seiner Vorderseite (6)ebenfalls einen Phenolharz und Papier aufweisenden Deckfilm (12) aufweist, der ebenfalls mit dem Kern (2) verpreßt ist.

11. Plattenförmiger Körper nach Anspruch 10,
**dadurch gekennzeichnet,**
daß der Deckfilm (12) der Vorderseite (6) eine Siebstruktur aufweist.

12. Plattenförmiger Körper nach Anspruch 11,
**dadurch gekennzeichnet,**
daß der Deckfilm (12) der Vorderseite (6) ein Gesamtgewicht von ca. 117g/m² bei einem Papiergewicht von ca. 42g/m² aufweist.

13. Plattenförmiger Körper nach einem der vorangegangenen Ansprüche,
**dadurch gekennzeichnet,**
daß der Kern (2) aus geleimten, kreuzweise mehrfach übereinander gelegten und miteinander verpreßten Furnieren besteht.

14. Plattenförmiger Körper nach einem der vorangegangenen Ansprüche,
**dadurch gekennzeichnet,**
daß der Kern (2) eine Stäbchenplatte aufweist.

15. Plattenförmiger Körper nach einem der vorangegangenen Ansprüche,
**dadurch gekennzeichnet,**
daß der Kern (2) Massivholz aufweist.
